# EUROPEAN PATENT SPECIFICATION

(11) **EP 0 961 895 B1**
(45) Date of publication and mention of the grant of the patent: **28.12.2005**
(21) Application number: 98906499.3
(22) Date of filing: 19.02.1998
(51) Int. Cl.: F16L 23/02, F16L 23/22

(54) **HYGIENIC FLANGE-TYPE TUBE JOINT THERMAL EXPANSION AREA FOR GASKET**
HYGIENISCHE FLASCHVERBINDUNG MIT WÄRMEDEHNUNGSBEREICH FÜR DEN DICHTRING
ZONE DE DILATATION THERMIQUE DE RACCORD DE TUYAU HYGIENIQUE DU TYPE RACCORD A BRIDES CONCU POUR UN JOINT D'ETANCHEITE STATIQUE

(30) Priority: 24.02.1997 US 38993 P; 18.02.1998 US 75081 P
(43) Date of publication of application: 08.12.1999
(73) Proprietor: Swagelok Marketing Co., Solon, OH 44139 (US)
(72) Inventor: COONCE, Richard, L., Seven Hills, OH 44131 (US); SHARGHI, Aaran, Safala, Stow, OH 44224-5338 (US); SLIFE, Douglas, Alan, Hudson, OH 44236 (US)
(74) Representative: Neill, Alastair William
(86) International application number: PCT/US1998/003040
(87) International publication number: WO 1998/037352

(56) References cited:
- EP-A- 0 327 714
- DE-A- 4 201 535
- DE-U- 1 962 745
- US-A- 3 195 906

## Description

### Background of the Invention

The subject invention is directed toward the art of pipe or tube joints and couplings and, more particularly, to a flange-type tube joint incorporating an improved relationship between the face seal and an associated gasket.

Flange-type tube joints have soft material gaskets, e.g. elastomeric. plastic, etc. that are clamped between opposed flange end faces for sealing purposes. These tube joints are frequently used in hygienic processing systems where fluid retention is highly undesirable. These systems are usually constructed with small angle slopes on the order of 2° on tubing runs and employ gravity drains. Therefore. due to the small angle slope, it is necessary to limit the potential for fluid retention by concentrating on regions where fluid retention may occur. For example, it is known to design the gasket and associated flanges such that when the joint is completed, the radially inner face of the gasket forms a substantially flush or smooth continuation between the interior surfaces of the connected tubes. Joints of this general type are shown, for example, in U.S. Patent Nos. 3,775,832, 4,735,445, CH 674764 A5 and DE-C-947,034.

The prior art has proposed various methods or designs to assure that over or under compression of the gasket cannot occur. In spite of this. it has been found that both situations can occur resulting in a variety of process problems that are significant and often unrecognized. When gaskets are over compressed the gasket material is extruded into the flow path of the pipe or tubing system. This can happen during initial makeup of the fitting or following a period of elevated process temperatures. such as a steam sterilization cycle. when thermal expansion of the gasket will result in excessive extrusion. Excessive extrusion causes several primary problems including flow restriction. cell shear, system contamination and fluid retention. Flow restriction can occur, for example, from having the inner periphery of the gasket extend excessively into the flow path thus creating an orifice effect. Hygienic systems are validated by the FDA for specific cleaning procedures including minimum flow rates needed to create the turbulent flow conditions required to effect the cleaning process. A gasket in a restrictive flow condition can cause the system to not meet the required fluid velocities and consequently not meet government regulations. A second problem, cell shear, is caused by delicate micro-organisms impacting on the extruded gasket resulting in the destruction of the cell which is the target product of the bioprocess. A third problem. system contamination, can result when over time of exposure to process conditions, especially steam. an extruded gasket can become brittle and break off pieces that cause system contamination. A fourth problem, fluid retention. occurs when draining the system to recover the product. The extruded gaskets result in retention of substantial amounts of process fluid in the system. This is a significant problem in systems requiring a high degree of cleanliness and/or ease of flushing and changeover between process fluids.

In the case of under compression two primary problems occur, fluid entrapment and leakage. Under compression can occur from improper assembly or as a result of thermal cycles. As a gasket extrudes under temperature, as discussed above, when cooled back to normal or ambient process temperatures. it will not return to its original position in conventional hygienic fittings. When this condition occurs there is less compressive force on the remaining gasket material within the fitting which can cause the fitting to loosen. In some cases only a single thermal cycle can result in a loss of the seal at the bore line which allows process fluid to enter the seal area and become entrapped. The isolated fluid cannot be cleaned without disassembly and can cause contamination of the same or subsequent batches. In some cases. process fluid reaches atmosphere and leakage occurs.

### Summary of the Invention

The subject invention provides a tube joint construction of the type discussed above that is designed to eliminate or greatly reduce gasket extrusion, reduce flow restriction. reduce contamination, reduce fluid retention. and provide improved alignment during assembly.

In particular, a tube joint assembly of the general type discussed includes a pair of cylindrical tube ends in axially aligned contiguous relationship. Each tube end has a cylindrical interior surface of the same diameter in aligned relationship with the cylindrical interior surface of the opposed tube end. Connecting flanges extend radially outward of each tube end with axially opposed faces defining a circumferentially continuous packing groove including a first axially narrow portion defined by axially opposed sealing faces. The first axially narrow portion opens to the cylindrical interior surfaces. A second axially wider portion of the groove is located radially outward of the first portion and has a radial outer face radially overlying and aligned with the first axially narrow portion. A soft material gasket is positioned in the packing groove. A gasket configuration has a narrow portion or rib that is sized and dimensioned to completely fill the first axially narrow portion of the packing groove and engage the axially opposed sealing faces with substantial sealing pressure.

An integral second portion or crown of the gasket is sized and dimensioned to extend into the second portion of the packing groove. The second portion has an inner radial dimension that forms an interference fit with the tube ends for ease of assembly and sufficient mass to hold the tube ends in a desired aligned relation during makeup of the joint. These structural features thus contribute to improved alignment of the components in the assembled fluid system for ease of assembly.

Such a tube joint construction is known by document DE-A-4 201 535, representing the first portion of claim 1. The problem to reduce gasket extrusion to reduce flow restriction, contamination and fluid retention is solved by the characterising features of said claim.

The second portion of the gasket also has a radial dimension sufficient to extend radially across the second portion of the packing groove and into compressive engagement with the radial outer face thereof when the joint is completed. The axial extent of the packing groove is sufficiently large to provide expansion space into which the gasket can expand when subjected to temperature increases. Provision of the expansion space thereby reduces radially inward extrusion of the gasket beyond the cylindrical interior surfaces of the tube ends.

The invention as described above results from a finding that materials used for such gaskets undergo an extrusion either as a result of initial makeup of the coupling or as a result of increased temperature. By providing expansion space at a location disposed radially outward of the narrow inner sealing portion of the gasket, there results a significant reduction of gasket expansion into the flow path of the tube ends. The narrow inner sealing portion of the gasket is radially loaded because the second portion of the gasket is sized to extend radially across the second portion of the packing groove into compressive engagement with the radial outer face of the second portion of the packing groove. Moreover, the compressive engagement forms a secondary seal radially outward of the primary seal.

Additionally, the engagement between the gasket second portion and the radial outer face of the packing groove provides a radial compression. or hoop strength. that permits the expansion of the gasket into the expansion space while holding the gasket from undesired radial shifting of the narrow inner sealing portion from its desired location adjacent the flow path.

As can be seen from the foregoing, a primary object of the invention is the provision of a fitting and gasket assembly wherein extrusion of the gasket into the fluid flow path is substantially reduced and a smooth continuation of the inner wall surfaces of the connected tubes is maintained thereby reducing fluid retention, flow restriction and system contamination.

Still another object of the invention resides in the improved alignment of the components of the joint assembly.

Yet another object is the provision of a pipe or tube joint assembly that provides a secondary seal.

### Brief Description of the Drawings

The invention may take physical form in certain parts and arrangements of parts, preferred embodiments and a method of which will be described in detail in this specification and illustrated in the accompanying drawings which form a part hereof, and wherein:
FIGURE 1 is a transverse cross-sectional view through a preferred form of pipe or tube joint construction formed in accordance with the subject invention;
FIGURE 2 is a greatly enlarged view of the gasket recess of the made-up joint of FIGURE 1 to more fully show the relationships between the gasket and the gasket recess:
FIGURE 3 is a greatly enlarged cross-sectional view through the gasket;
FIGURE 4 is a cross-sectional view of the gasket in its uncompressed form overlaid on the gasket recess to provide a better understanding of the relative relationships involved;
FIGURE 5 is a cross-sectional view of another preferred embodiment of the invention;
FIGURE 6 illustrates the addition of ports in the joint assembly for sensing or monitoring the integrity of the bore line seal and potential contamination: and
FIGURES 7A-7E illustrate alternative exemplary configurations and shapes for a gasket in accordance with the invention.

### Detailed Description of the Preferred Embodiment

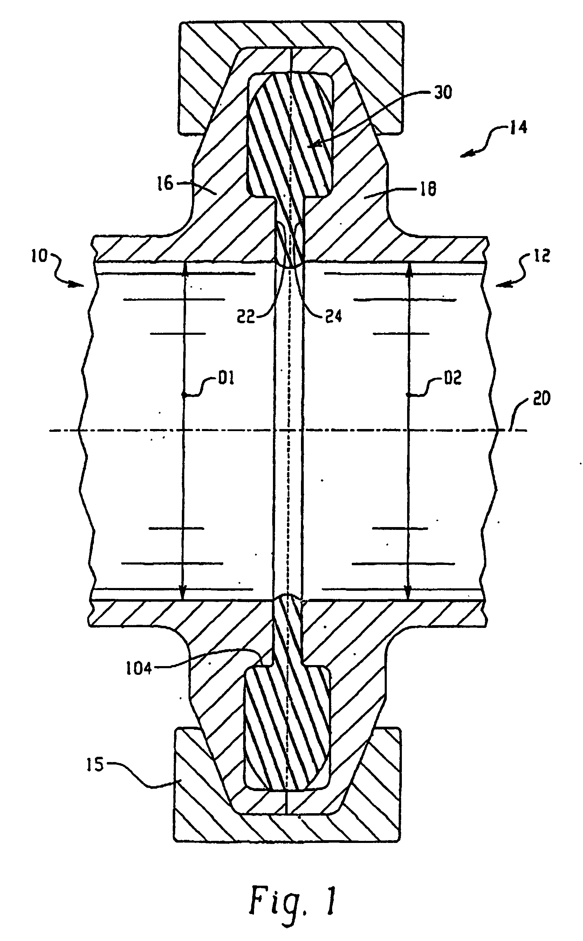

Referring now to the drawings wherein the showings are for the purposes of illustrating preferred embodiments of the invention only and not for purposes of limiting same, FIGURE 1 shows a pair of axially aligned, cylindrical pipe or tube ends 10, 12 which are joined in sealed relationship by a flange-type joint assembly 14. The tube ends 10, 12 have uniform inner open diameters D1 and D2, respectively, which are of the same diameter and positioned in closely aligned relationship. Circumferentially continuous, radially extending flanges 16. 18. respectively, are formed at the ends of each of the tube ends 10, 12. The flanges allow the tube ends to be clamped in the assembled condition shown by a conventional clamp ring 15 which is only schematically illustrated in the drawing. Although the flanges 16, 18 could be formed as separate elements and suitably connected to the tube ends. they are shown in the subject embodiment as being integrally formed on the respective tube ends 10, 12.

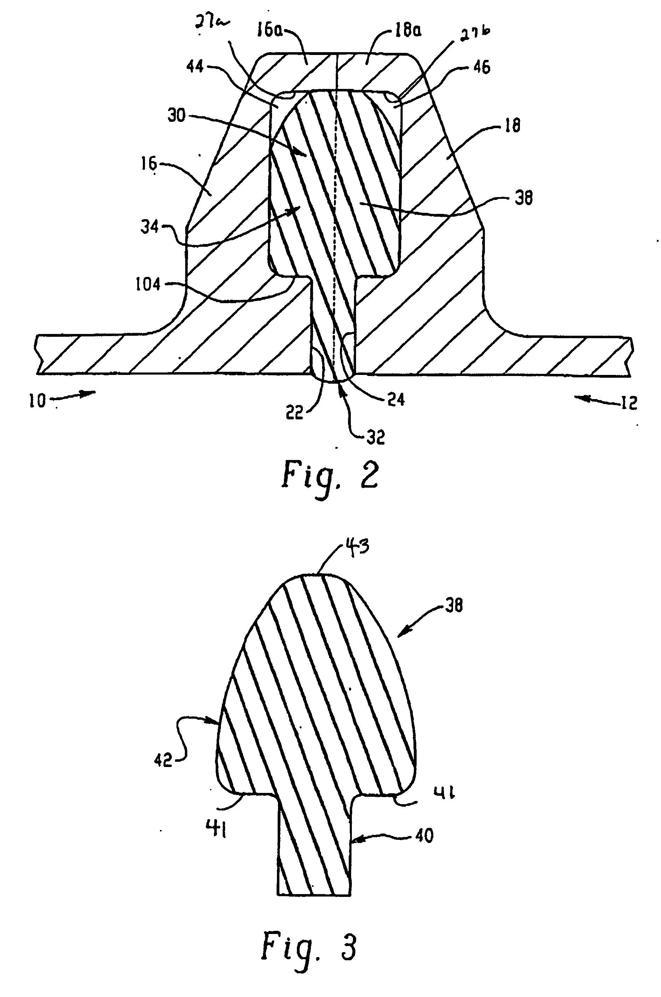

Each of the flanges 16, 18 includes a sealing end face that preferably lies in a plane perpendicular to the center axis 20. End faces 22. 24 of the flanges 16, 18, respectively, and adjacent radial and walls 27a, b cooperate to define a circumferentially continuous packing receiving recess or groove 30. In the subject embodiment, the packing receiving groove 30 is arranged so that when the flanges 16, 18 are clamped into the relationship shown in FIGURE 1, the groove 30 has a radial inner first portion 32 (see FIGURE 2) which is relatively narrow and opens toward the interior of the central flow passage. The groove 30 further includes a second axially wider portion 34 that is located radially outward of the first portion 32 and is circumferentially continuous thereabout. The control of the width of the packing groove 30 is provided by rigid extensions 16a, 18a on the. radial outer edge of the flanges 16, 18, respectively, to limit movement of the flanges axially toward one another.

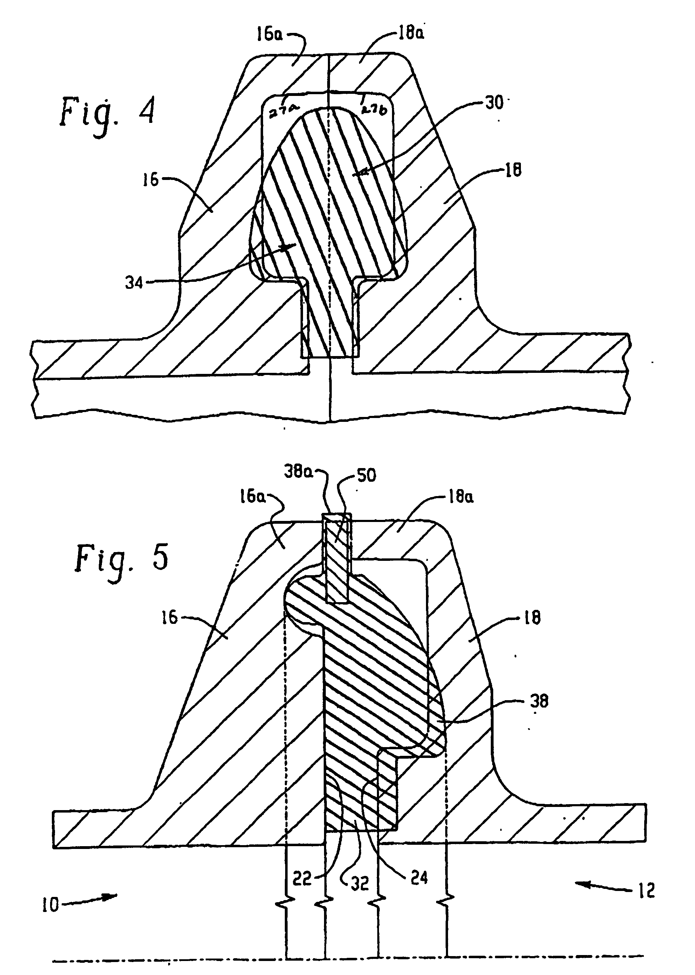

Positioned within the groove 30 is a gasket 38 formed from a suitable soft material that will form an effective seal when compressed between the flanges. Many different gasket materials could be used including ethylene propylenes, fluorocarbons. silicone rubbers, nitriles, neoprenes, polyethylene and tetrafluoroethylenes. In this embodiment, the gasket 38 has a preferred cross-section as shown in FIGURE 3. As will be described hereinafter, the shape of the gasket 38 can have different configurations and appearances while still achieving the benefits and advantages of the invention. A radially inner portion 40 of the gasket defines a rib that has a substantially constant axial dimension that, in an uncompressed state, is slightly greater than the axial dimension of the radially inner portion of the groove (see the superimposed representation of FIGURE 4). When assembled, the radial inner portion is compressed between the faces 22, 24 to form a first or primary seal that fills the void defined by the inner, narrow portion of the groove. Moreover. in the illustrated embodiment of Figure 4 the inner radial diameter of the gasket in an uncompressed state is slightly greater than the diameter of the flow path. Thus when the joint is fully assembled, the inner diameter of the gasket is displaced into a substantially flush relation with the diameter of the flow path creating a bore line seal that reduces fluid retention and prevents fluid entrapment. even at elevated system process temperatures. In other embodiments, however, the uncompressed rib 40 can have a diameter that is less than. greater than or equal to the diameter of the flow path, depending on the associated fitting configuration, to produce after make-up a flush or substantially flush bore line seal. In some embodiments it will be desirable to permit a small extrusion of the gasket rib 40 into the flow path after make-up, as illustrated in an exaggerated manner in FIGURE 2. In such cases. especially for hygienic applications, it will be desired that the rib portion that extends into the flow path be convex to reduce fluid entrapment. The present invention can be used with such a configuration because the invention provides features that reduce further extrusion at elevated system process temperatures, as will be described hereinafter.

The radially outer portion 42 of the gasket has an enlarged axial and radial dimension relative to the rib 40 that forms, in the embodiment of Figure 3, a mushroom-shaped cap or crown 42 that extends integrally from the gasket inner portion 40. Again. with reference to FIGURE 4, the axial dimension of the cap (at its widest portion) in an uncompressed state is larger than the axial dimension of the groove in the completed joint. In this manner, the gasket is compressed into sealing contact with radial faces of the enlarged portion of the groove (see FIGURES 1 and 2). The compression resulting from these dimensional relationships also displaces the gasket material radially outward so that it engages the radial outer wall of the groove at the rigid extensions 16a. 18a. This engagement forms a secondary seal that can significantly increase the rated pressure of the assembly. Furthermore, the secondary seal presents a barrier to atmosphere outside the hygienic fitting. For example, the secondary seal serves to make the hygienic fitting splash proof.

The engagement also has the additional advantage of causing hoop stress (i.e. increasing hoop strength) that prevents the rib of the gasket from moving radially outward in response to pressure in the fluid system. Prior art arrangements that use axial compression and include a gap between the outer radial edge of the gasket and the groove wall (here defined by the rigid extensions) are potentially subject in some applications to radial shifting of the gasket in response to pressure in the fluid line. The entire gasket in such prior designs is thus susceptible to radial shifting resulting in the loss of an effective bore line seal and the attendant problems of fluid retention. contamination, etc. In the present invention, the radial engagement between the rigid extensions 16a. 18a and the second portion of the gasket 42 thus inhibits this undesirable action while providing a secondary seal or barrier.

The rounded tapering outer radial region of the cap 42 with the inner portion 40 provides the distinctive mushroom shape to the gasket. The smooth transition and reduction in the axial dimension of the gasket as it extends radially outward from the tube bore provides for expansion spaces 44, 46. The second axially wider portion 34 of the groove 30 is dimensioned to accommodate anticipated expansion of the gasket in response to elevated temperatures and is not intended to be completely filled by the gasket at ambient temperature. Thus, even though the gasket engages the rigid extensions to form the secondary seal as described above, the spaces 44. 46 are defined between the groove wall and the reduced or tapering region of the gasket.

The enlarged mass of the cap 42 provided by the preferred configuration also has the advantage of improving alignment of the joint components, even while still allowing for an expansion space and the radial compression. That is, since the gasket is dimensioned to form an interference fit with the groove at the interface of the first and second portions of the groove, the gasket will remain in place on a first flange while the opposing flange is positioned for initial make-up of the joint assembly, and the opposing tubes are held in temporary alignment while the joint assembly is completed. The enlarged mass of the gasket also provides a positive alignment reference in the nature of a "fit" that is tactilely sensed as the flanges are brought together about the gasket and helps keep the flanges and tubes in alignment during the make-up procedure. This allows the user to complete the joint assembly without adjusting the alignment of the tube ends. Likewise. the tubing alignment is improved since the initial makeup of the tubes is more accurate and maintained through assembly of the joint.

As illustrated in FIGURE 5. another preferred embodiment of the gasket incorporating the features of the invention is illustrated. Particularly, it is evident that the gasket need not be symmetrically formed about a radial axis. Here. the right-hand face of the gasket has the generally mushroom-shape of the gasket described in connection with the embodiment of FIGURES 1-4. However, the outer radial portion of the gasket is not intended to engage the rigid extensions and form a secondary seal since an annular metal ring 50 is employed for receipt between the rigid extensions. The engagement between the metal ring 50 and the faces of the rigid extensions limits the axial compression that can be imposed on the gasket. The other features of the present invention such as (i) forming an effective bore line seal and (ii) forming an expansion space upon makeup of the joint for elevated temperature conditions, are still provided. The opposite face, or left-hand face. of the gasket is a conventional configuration and thus does not incorporate all of the features of the invention. It does illustrate, though, that the gasket can adopt a number of different configurations without departing from the overall scope and intent of the invention. Thus. the assembly 38, 50 is in the form of an adapter device that permits two different flange configurations to be joined while at the same time maintaining an effective bore line seal and expansion area.

As illustrated in FIGURE 5, a thin layer 38a of the gasket 38 material encapsulates the metal ring 50. This can be accomplished, for example, during a molding process for the gasket 38. The entire ring need not be encapsulated.

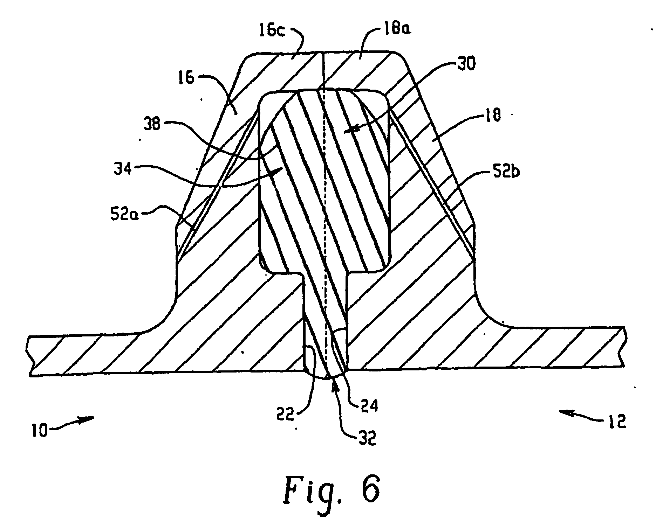

FIGURE 6 is another modification of the invention that incorporates sensing or monitoring capabilities to the joint assembly. Particularly. when a secondary seal is formed by the cap or second portion of the gasket, the flanges may be modified to include capillary ports 52a, 52b that communicate with the expansion spaces 44, 46. Suitable sensors (not shown) will communicate with the ports and provide an indication of the integrity of the bore line seal. This provides the system operator with the ability to accurately monitor the integrity of the primary seal through the expansion spaces 44, 46 while the secondary seal still contains the system pressure if a bore line seal fails. Moreover, the monitoring arrangement can be incorporated on both sides of the gasket or used on just one side if a modified form of gasket (for example as shown in FIGURE 5) is used.

FIGURES 2 and 3 illustrate the preferred nominal dimensional relationships for the groove 30 and the gasket 38, respectively. In particular, the seal face of the flange has the general dimensions as shown for tubes having a nominal O.D. of 1.00 inches and an I.D. of 0.87 inches; however, the general relationships are valid for a range of tube sizes. In reviewing these dimensions and comparing the recess dimensions with the gasket dimensions, it will be seen that the narrower inner portion of the seal is compressed in the axial dimension by about 20-30% whereas the wider outer portion is compressed about 15-20%. This. of course, results in significantly higher sealing pressures between the rib 40 and the radial inner faces of the groove. Additionally, however, it will be seen that the wider portion of the gasket 38 is axially compressed until it moves to place the radial outer face of the gasket into compressive engagement with the radial outer face of the groove and form the secondary seal.

It will also be understood by those skilled in the art that the expansion spaces 44. 46 are not constrained to the configuration shown and described above. Any suitable dimensioning of the gasket and groove that permits the desired expansion can be used. Moreover. it is also contemplated that the gasket include void areas in the second portion of the gasket that can serve the same purpose. Thus, for example, notches can be formed at spaced circumferential locations of the gasket second portion or through openings in the gasket second portion can achieve this same objective.

Those skilled in the art will appreciate that the gasket 38 material will affect some of the functional aspects of the gasket. For example, when the gasket is made of an elastomeric material such as silicone rubbers and fluorocarbons, to name two examples. the enlarged cap 42 will be compressed as the assembly 14 is made up, to produce the radial compression and secondary seal at the extensions 16a and 18a. When the gasket 38 is made of a relatively harder material (although suitably soft to form the primary bore line seal at the faces 22, 24) such as polytetrafluoroethylene (PTFE), the enlarged cap 42 does not significantly extend radially so as to engage the extensions 16a and 18a. Thus. in the case of PTFE, for example, the cap 42 mushroom shaped appearance is ornamental. although an interference fit and enlarged mass is still used to maintain alignment during initial make-up. Materials such as PTFE have sufficient hoop strength to maintain the bore line seal at the intended pressures without the added support of the radial compression.

It should further be noted that in the described embodiment. such as FIGURE 2 for example, the end faces 22, 24 that define the groove enlarged portion 34, engage the axial outer portions of the cap 42 before the rib 40 is engaged. This produces an initial compression on the cap 42 that supports and helps control radial extension of the rib as the rib is compressed when the fitting is made up.

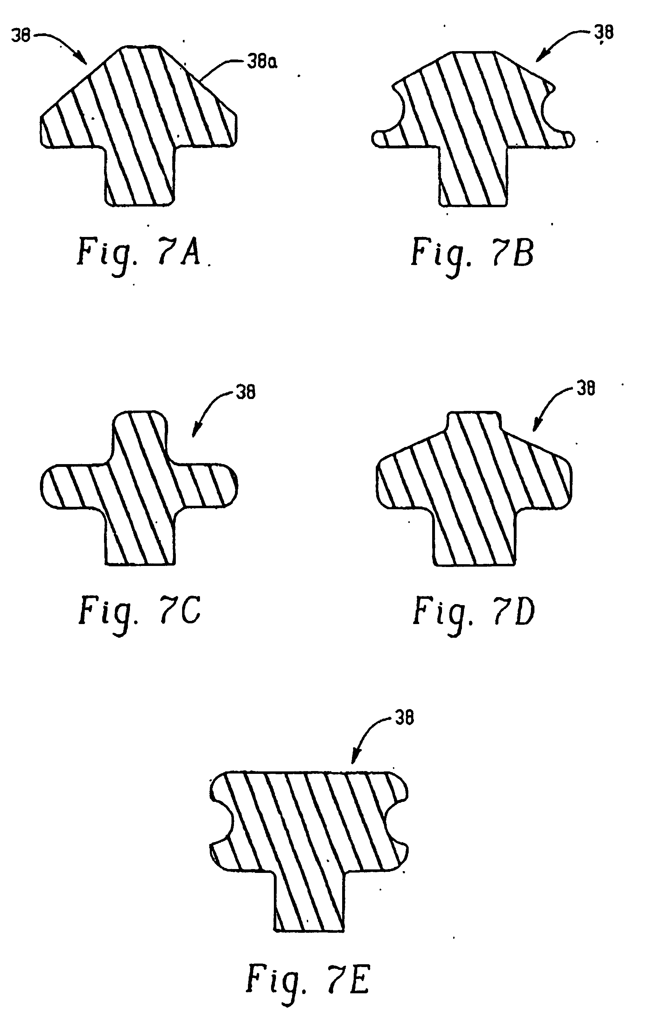

With reference to FIGURES 7A-7E, there is illustrated in an exemplary manner different shapes and configurations of the gasket 38, in particular the cross-sectional shapes (in FIGURES 7A-7E only half of each cross-section of the gaskets 38 is illustrated). For example, in FIGURE 7A. the radial taper in the gasket axial dimension is conical to form a flat edge 38a (when viewed in section). The exemplary shapes in FIGURES 7A-7E inclusive can include the interference fit and enlarged mass features vis-à-vis the packing groove 30 as described herein before. Furthermore, when the gaskets of FIGURES 7A-7E are made of an elastomer and with appropriate dimensions relative to the groove 30, they will be compressed and will extend radially to form the radial compression at the extensions 16a. 18a. These different embodiments are provided to emphasize that the shape and configuration of the gasket cap 42 is largely ornamental in terms of its appearance. and that the various desired functional aspects of the gasket 38 in accordance with the invention can be achieved with any number of configurations and shapes.

In accordance with another aspect of the invention, it will be appreciated from the foregoing descriptions that the gasket 38 can take on three radial dimensions at the rib inner annulus at different points in the make-up of the assembly 14. For example. when the gasket is free standing, not yet mounted on a flange, the inner diameter of the rib 40 will be dimension X, for example, with X being greater than the tube 10. 12 inside diameter. In other embodiments, the dimension X can be less than or equal to the tube inside diameter. When the gasket is pushed onto the counter bore 104 that forms the interface between the inner radial portion 32 and the radial outward portion 34 of the groove 30, the rib inner diameter will be dimension X + Y because of the interference fit. Thirdly. after the assembly 14 has been made up. the radial extension of the rib 40 caused by compression of the rib 40 will change the inner diameter of the rib 42 to be substantially equal to the tube 10, 12 inside diameter to provide the flush bore line seal. Again, in some applications, the compression on the rib 40 will be designed to produce a slight extrusion preferably convex in nature (see FIGURE 1) into the tube inner diameter region to avoid a recess that could be difficult to clean in place. In all the drawings herein, some relative dimensions, such as for example the relative squeeze on the rib and cap or the illustrated amount of extrusion into the fluid path. have been exaggerated for clarity and ease of illustration.

## Claims

1. A flange joint (16,18) and gasket (38) for joining and sealing tube or pipe ends (10,12) that define an axial flow passage therethrough, comprising:
a first annular flange (16) and a second annular flange (18), each of said flanges (16,18) being at a respective one of the tube ends (10,12); said flanges (16,18) having axially opposed end faces (22,24) and adjacent radial end walls (27a,b) that define a circumferential groove (30) when the joint is assembled;
said groove (30) having a first portion (32) open to the flow passage of the tubes (10,12) and having a second portion (34) that extends radially outward from said groove first portion (32), said groove second portion (34) being radially bounded by said radial end walls (27a,b); and
a gasket (38) to seal the assembled joint (16,18) to prevent loss of fluid from the flow passage of the tubes (16,18) said gasket (38) having a gasket first portion (40) that seals said groove first portion (32) and having a gasket second portion (42) that extends from said gasket first portion (40) and into said groove second portion (34); **characterised in that**
said gasket second portion (42) is axially compressed when the joint is assembled and engages with said radial end walls (27a,b) to produce a radial compression of said gasket; said gasket second portion (42) having a volume that is less than volume of said groove second portion (34) to provide an expansion space (44,46) in said groove second portion (34) when the joint is assembled.

2. The assembly of claim 1 wherein said radial compression opposes radial pressure from fluid in the flow passage to prevent radial displacement of said gasket (38).

3. The assembly of claim 1 wherein said gasket second portion (42) engages said radial end walls (27a,b) forming a secondary seal that is radially aligned and spaced from said seal formed by said gasket first portion (40).

4. The assembly of claim 1 wherein said gasket second portion (42) has an outer edge face (43) that is radially aligned with said gasket first portion (40).

5. The assembly of claim 1 wherein said gasket second portion (42) is axially symmetric about a radial line that is common to said gasket first and second portions.

6. The assembly of claim 1 wherein said gasket first portion (40) comprises a rib that is axially compressed when the joint is assembled, said rib when under compression in the assembled joint being radially displaced to form a substantially flush bore line seal that is contiguous with interior surfaces of the tubes (10,12).

7. The assembly of claim 1 wherein a radial distal portion of said gasket second portion (42) comprises a crown that engages said radial end walls (27a,b) when the joint is assembled; said expansion space (44,46) being adjacent and axially symmetric about said gasket radial distal portion; said expansion space permitting expansion of gasket material when said gasket is exposed to increased temperature.

8. The assembly of claim 1 wherein said gasket second portion (42) is integral with said gasket first portion (40) and is axially wider than said gasket first portion with a shoulder (41) formed at the interface of said gasket first and second portions; said shoulder having an inner diameter that produces an interference fit at an interface (104) between said groove first portion and said groove second portion; said groove second portion having an axial dimension that is greater than an axial dimension of said groove first portion.

9. The assembly of claim 8 wherein said interference fit permits said gasket to be centered and retained on one of said flanges during assembly of the joint.

10. The assembly of claim 8 wherein said gasket second portion (42) when uncompressed has an axial dimension that is greater than said axial dimension of said groove second portion and has an enlarged mass to maintain a desired alignment of the flanges during assembly of the joint.

11. The assembly of claim 1 wherein said gasket second portion (42) is axially wider than said gasket first portion and has a cross-section that tapers radially outward from said gasket first portion.

12. The assembly of claim 11 wherein said expansion space (44) is formed between said axially opposed end faces, said radial end walls and said gasket tapered portion.

13. The assembly of claim 1 wherein said gasket has a mushroom-shaped cross-section.

14. The assembly of claim 1 wherein said gasket first portion (40) comprises a rib with an inner annular surface, said rib annular surface having: a first diameter before the gasket is positioned on one of said flanges, a second diameter that is greater than said first diameter after the gasket is positioned on one of said flanges and before the gasket is compressed, and a third diameter after the joint is assembled with the gasket compressed.

15. The assembly of claim 1, wherein said radial end walls (27a,b) are formed by rigid radial outer extensions (16a,18a) of said flanges (16,18) that engage each other when the joint is assembled to limit compressive force applied to said gasket.

16. The assembly of claim 1 wherein said gasket first portion (40) is axially compressed in the range of about 20%-30% when the joint is assembled, and said gasket second portion is axially compressed in the range of about 15%-20%.

17. A method for sealing a flange joint of the type that uses two flanges to join axially aligned tube ends, the flanges when the joint is assembled forming a groove therebetween with the groove being defined by axially opposed seal faces and a radial end face according to claims 1 to 16, the method comprising the steps of:
(a) positioning a gasket in the groove between axially opposed seal faces of the flanges;
(b) compressing the gasket axially when the joint is assembled to displace a portion of the gasket that radially engages the radial end face;
(c) compressing the gasket axially sufficient to produce a radial compression of the gasket; and
(d) limiting compression of the gasket to maintain an expansion area for the gasket.

18. The method of claim 17 wherein said radial compression increases hoop strength of the gasket to oppose radial forces produced by fluid pressure in the tubes.

19. The method of claim 17 wherein said radial compression provides a secondary seal radially aligned and spaced from a primary seal at an interface of the tube ends.

20. The method of claim 17 comprising the step of using an interference fit between the gasket and the flanges to retain the gasket in a desired centered position during assembly of the joint.

21. The method of claim 20 comprising the step of providing sufficient mass to the gasket to use the gasket for maintaining a desired alignment of the flanges during assembly of the joint.

22. The assembly of claim 1 wherein said gasket comprises an elastomer.

## Patentansprüche

1. Flanschverbindung (16, 18) und Dichtung (38) zum Verbinden und Abdichten von Röhren- bzw. Rohrenden (10, 12), die einen axialen Strömungskanal bilden, welche aufweist:
einen ersten ringförmigen Flansch (16) und einen zweiten ringförmigen Flansch (18), wobei sich jeder Flansch (16, 18) an einem jeweiligen Röhrenende (10, 12) befindet, wobei die Flansche (16, 18) axial gegenüberliegende Endflächen (22, 24) und angrenzende radiale Stirnwände (27a, b) haben, die eine Umfangsnut (30) bilden, wenn die Verbindung montiert ist;
wobei die Nut (30) einen ersten Abschnitt (32), der zum Strömungskanal der Röhren (10, 12) offen ist, und einen zweiten Abschnitt (34) aufweist, der sich von dem ersten Nutabschnitt (32) radial nach außen erstreckt, wobei der zweite Nutabschnitt (34) radial von den radialen Stirnwänden (27a, b) begrenzt wird, und
eine Dichtung (38) zum Abdichten der montierten Verbindung (16, 18), um einen Fluidverlust aus dem Strömungskanal der Röhren (16, 18) zu,verhindern,
wobei die Dichtung (38) einen ersten Dichtungsabschnitt (40), der den ersten Nutabschnitt (32) abdichtet, und einen zweiten Dichtungsabschnitt (42) aufweist, der sich von dem ersten Dichtungsabschnitt (40) in den zweiten Nutabschnitt (34) hinein erstreckt,
**dadurch gekennzeichnet, dass**
der zweite Dichtungsabschnitt (42) axial zusammengedrückt wird, wenn die Verbindung montiert ist, und mit den radialen Stirnwänden (27a,b) in Eingriff kommt, um eine radiale Kompression der Dichtung zu bewirken, wobei der zweite Dichtungsabschnitt (42) ein Volumen aufweist, das kleiner ist als das Volumen des zweiten Nutabschnitts (34), sodass ein Ausdehnungsraum (44, 46) in dem zweiten Nutabschnitt (34) geschaffen wird, wenn die Verbindung montiert ist.

2. Vorrichtung nach Anspruch 1, wobei die radiale Kompression dem radialen Druck von dem Fluid im Strömungskanal entgegenwirkt, um eine radiale Verschiebung der Dichtung (38) zu verhindern.

3. Vorrichtung nach Anspruch 1, wobei der zweite Dichtungsabschnitt (42) mit den radialen Stirnwänden (27a,b) in Eingriff kommt und eine zweite Dichtung bildet, die radial zu der von dem ersten Dichtungsabschnitt (40) gebildeten Abdichtung ausgerichtet und zu ihr beabstandet ist.

4. Vorrichtung nach Anspruch 1, wobei der zweite Dichtungsabschnitt (42) eine Außenrandfläche (43) aufweist, die radial zu dem ersten Dichtungsabschnitt (40) ausgerichtet ist.

5. Vorrichtung nach Anspruch 1, wobei der zweite Dichtungsabschnitt (42) axialsymmetrisch um eine gemeinsame Radiallinie des ersten und des zweiten Dichtungsabschnittes ist.

6. Vorrichtung nach Anspruch 1, wobei der erste Dichtungsabschnitt (40) eine Rippe aufweist, die axial zusammengedrückt wird, wenn die Verbindung montiert ist, wobei die Rippe unter Kompression in der montierten Verbindung radial verschoben wird, sodass eine im Wesentlichen bündige Bohrlinienabdichtung geschaffen wird, die in die Innenflächen der Röhren (10, 12) übergeht.

7. Vorrichtung nach Anspruch 1, wobei ein radialer distaler Abschnitt des zweiten Dichtungsabschnitts (42) eine Krone aufweist, die mit den radialen Stirnwänden (27a,b) in Eingriff kommt, wenn die Verbindung montiert ist, wobei der Ausdehnungsraum (44, 46) an den radialen distalen Dichtungsabschnitt angrenzt und axialsymmetrisch zu ihm ist, wobei der Ausdehnungsraum eine Ausdehnung des Dichtungsmaterials gestattet, wenn die Dichtung einer erhöhten Temperatur ausgesetzt ist.

8. Vorrichtung nach Anspruch 1, wobei der zweite Dichtungsabschnitt (42) integral mit dem ersten Dichtungsabschnitt (40) ausgebildet ist und mit einer Schulter (41), die an der Grenzfläche zwischen dem ersten und dem zweiten Dichtungsabschnitt ausgebildet ist, eine größere axiale Breite aufweist als der erste Dichtungsabschnitt; wobei die Schulter einen Innendurchmesser hat, der an der Grenzfläche (104) zwischen dem ersten Nutabschnitt und dem zweiten Nutabschnitt einen Presssitz erzeugt, wobei der zweite Nutabschnitt eine axiale Abmessung hat, die größer ist als eine axiale Abmessung des ersten Nutabschnitts.

9. Vorrichtung nach Anspruch 8, wobei der Presssitz ermöglicht, dass die Dichtung während der Montage der Verbindung zentriert und auf einem der Flansche gehalten wird.

10. Vorrichtung nach Anspruch 8, wobei der zweite Dichtungsabschnitt (42) im nicht zusammengedrückten Zustand eine axiale Abmessung hat, die größer ist als die axiale Abmessung des zweiten Nutabschnitts und eine größere Masse aufweist, um eine gewünschte Ausrichtung zu den Flanschen während der Montage der Verbindung aufrechtzuerhalten.

11. Vorrichtung nach Anspruch 1, wobei der zweite Dichtungsabschnitt (42) axial breiter ist als der erste Dichtungsabschnitt und einen Querschnitt aufweist, der sich von dem ersten Dichtungsabschnitt kegelförmig radial nach außen verjüngt.

12. Vorrichtung nach Anspruch 11, wobei der Ausdehnungsraum (44) zwischen den axial gegenüberliegenden Stimflächen, den radialen Stirnflächen und dem kegelförmigen Dichtungsabschnitt gebildet wird.

13. Vorrichtung nach Anspruch 1, wobei die Dichtung einen pilzförmigen Abschnitt hat.

14. Vorrichtung nach Anspruch 1, wobei der erste Dichtungsabschnitt (40) eine Rippe mit einer ringförmigen Innenfläche umfasst, wobei die ringförmige Rippenoberfläche aufweist: einen ersten Durchmesser, bevor die Dichtung auf einem der Flansche positioniert wird, einen zweiten Durchmesser, der größer ist als der erste Durchmesser, nachdem die Dichtung auf einem der Flansche positioniert und bevor die Dichtung zusammengedrückt wird, und einen dritten Durchmesser, nachdem die Verbindung mit der zusammengedrückten Dichtung montiert ist.

15. Vorrichtung nach Anspruch 1, wobei die radialen Stirnwände (27a, b) von starren, radialen äußeren Verlängerungen (16a, 18a) der Flansche (16, 18) gebildet werden, die miteinander in Eingriff kommen, wenn die Verbindung montiert ist, um auf die Dichtung einwirkende Druckkräfte zu begrenzen.

16. Vorrichtung nach Anspruch 1, wobei der erste Dichtungsabschnitt (40) axial zwischen etwa 20 % - 30 % zusammengedrückt wird, wenn die Verbindung montiert ist, und der zweite Dichtungsabschnitt axial zwischen etwa 15 % - 20 % zusammengedrückt wird.

17. Verfahren zum Abdichten einer Flanschverbindung der Art, die zwei Flansche zum Verbinden von axial zueinander ausgerichteten Röhrenenden verwendet, wobei die Flansche bei montierter Verbindung eine Nut zwischen sich bilden, wobei die Nut von axial gegenüberliegenden Abdichtflächen und einer radialen Stirnfläche gemäß den Ansprüchen 1 bis 16 gebildet wird, wobei das Verfahren die folgenden Schritte umfasst:
(a) Positionieren einer Dichtung in der Nut zwischen axial gegenüberliegenden Dichtungsflächen der Flansche;
(b) Zusammendrücken der Dichtung in axialer Richtung, wenn die Verbindung montiert ist, um einen Abschnitt der Dichtung zu verschieben, der radial mit der radialen Stirnfläche in Eingriff kommt;
(c) Ausreichendes axiales Zusammendrücken der Dichtung, um eine radiale Kompression der Dichtung zu erzeugen, und
(d) Begrenzen der Kompression der Dichtung, um eine Ausdehnungsfläche für die Dichtung zu erhalten.

18. Verfahren nach Anspruch 17, wobei die radiale Kompression die Umfangsfestigkeit der Dichtung erhöht, um von dem Fluiddruck in den Röhren erzeugten Radialkräften entgegenzuwirken.

19. Verfahren nach Anspruch 17, wobei die radiale Kompression eine zweite Abdichtung erzeugt, die radial zu einer ersten Dichtung an einer Grenzfläche der Röhrenenden ausgerichtet und zu dieser beabstandet ist.

20. Verfahren nach Anspruch 17 mit dem Schritt der Anwendung eines Presssitzes zwischen der Dichtung und den Flanschen, um die Dichtung während der Montage der Verbindung in einer gewünschten zentrierten Position zu halten.

21. Verfahren nach Anspruch 20 mit dem Schritt der Schaffung einer ausreichenden Masse für die Dichtung, um die Dichtung zur Aufrechterhaltung einer gewünschten Ausrichtung der Flansche während der Montage der Verbindung zu nutzen.

22. Vorrichtung nach Anspruch 1, wobei die Dichtung ein Elastomer umfasst.

## Revendications

1. Raccord à brides (16, 18) et joint (38) pour relier et rendre étanches des extrémités de tubes ou de tuyaux (10, 12) qui définissent un passage d'écoulement axial à travers eux, comprenant:
une première bride annulaire (16) et une seconde bride annulaire (18) dont chacune est située à une extrémité de tube (10, 12) correspondante; lesdites brides (16, 18) comportant des faces d'extrémité (22, 24) opposées axialement et des parois d'extrémité radiales adjacentes (27a, b) qui définissent une gorge circonférentielle (30) lorsque le raccord est assemblé;
ladite gorge (30) comportant une première partie (32) ouverte sur le passage d'écoulement des tubes (10, 12), et une seconde partie (34) qui s'étend radialement vers l'extérieur à partir de ladite première partie de gorge (32), ladite seconde partie de gorge (34) étant délimitée radialement par lesdites parois d'extrémité radiales (27a, b); et
un joint (38) destiné à rendre étanche le raccord (16, 18) assemblé afin d'empêcher une fuite de fluide hors du passage d'écoulement des tubes (16, 18), ledit joint (38) comportant une première partie de joint (40) qui rend étanche ladite première partie de gorge (32), et une seconde partie de joint (42) qui s'étend à partir de ladite première partie de joint (40) et pénètre dans ladite seconde partie de gorge (34), **caractérisé en ce que**
ladite seconde partie de joint (42) est comprimée axialement lorsque le raccord est assemblé et vient en contact avec lesdites parois d'extrémité radiales (27a, b) pour provoquer une compression radiale dudit joint; ladite seconde partie de joint (42) ayant un volume inférieur au volume de ladite seconde partie de gorge (34) pour définir un espace de dilatation (44, 46) dans cette dernière, lorsque le raccord est assemblé.

2. Ensemble selon la revendication 1, dans lequel ladite compression radiale s'oppose à une pression radiale exercée par un fluide présent dans le passage d'écoulement, pour empêcher un déplacement radial dudit joint (38).

3. Ensemble selon la revendication 1, dans lequel ladite seconde partie de joint (42) vient en contact avec lesdites parois d'extrémité radiales (27a, b) pour former un joint d'étanchéité secondaire aligné radialement avec ledit joint d'étanchéité formé par ladite première partie de joint (40), et espacé de celui-ci.

4. Ensemble selon la revendication 1, dans lequel ladite seconde partie de joint (42) a une face de bord extérieur (43) aligné radialement avec ladite première partie de joint (40).

5. Ensemble selon la revendication 1, dans lequel ladite seconde partie de joint (42) est symétrique axialement autour d'une ligne radiale commune auxdites première et seconde parties de joint.

6. Ensemble selon la revendication 1, dans lequel ladite première partie de joint (40) comprend une nervure qui est comprimée axialement lorsque le raccord est assemblé, ladite nervure étant, à l'état comprimé dans le raccord assemblé, déplacée radialement pour former un joint d'étanchéité linéaire sensiblement à fleur d'alésage qui est contigu à des surfaces intérieures des tubes (10, 12).

7. Ensemble selon la revendication 1, dans lequel une partie distale radiale de ladite seconde partie de joint (42) comprend un sommet qui vient en contact avec lesdites parois 'd'extrémité radiales (27a, b) lorsque le raccord est assemblé, ledit espace de dilatation (44, 46) étant adjacent à ladite partie distale radiale du joint et symétrique axialement autour de celle-ci, espace de dilatation qui permet une dilatation de la matière du joint lorsque celui-ci est exposé à une augmentation de température.

8. Ensemble selon la revendication 1, dans lequel ladite seconde partie de joint (42) est solidaire de ladite première partie de joint (40) et est plus large axialement que cette dernière, un épaulement (41) étant formé au niveau de l'interface desdites première et seconde parties de joint, épaulement qui a un diamètre intérieur établissant une jonction à ajustement serré au niveau d'une interface (104) entre ladite première partie de gorge et ladite seconde partie de gorge, ladite seconde partie de gorge ayant une dimension axiale supérieure à une dimension axiale de ladite première partie de gorge.

9. Ensemble selon la revendication 8, dans lequel ladite jonction à ajustement serré permet audit joint d'être centré et retenu sur l'une desdites brides au cours de l'assemblage du raccord.

10. Ensemble selon la revendication 8, dans lequel, à l'état non comprimé, ladite seconde partie de joint (42) a une dimension axiale supérieure à ladite dimension axiale de ladite seconde partie de gorge et une masse accrue pour maintenir un alignement souhaité des brides au cours de l'assemblage du raccord.

11. Ensemble selon la revendication 1, dans lequel ladite seconde partie de joint (42) est plus large axialement que ladite première partie de joint et a une section transversale qui s'effile radialement vers l'extérieur à partir de ladite première partie de joint.

12. Ensemble selon la revendication 11, dans lequel ledit espace de dilatation (44) est formé entre lesdites faces d'extrémité opposées axialement, lesdites parois d'extrémité radiales et ladite partie effilée du joint.

13. Ensemble selon la revendication 1, dans lequel ledit joint a une section transversale en forme de champignon.

14. Ensemble selon la revendication 1, dans lequel ladite première partie de joint (40) comprend une nervure pourvue d'une surface annulaire intérieure, ladite surface annulaire de nervure ayant un premier diamètre avant positionnement du joint sur l'une desdites brides, un second diamètre supérieur audit premier diamètre après positionnement du joint sur l'une desdites brides et avant compression de celui-ci, et un troisième diamètre après assemblage du raccord et compression du joint.

15. Ensemble selon la revendication 1, dans lequel lesdites parois d'extrémité radiales (27a, b) sont formées par des prolongements extérieurs radiaux rigides (16a, 18a) desdites brides (16, 18), qui viennent en contact l'un avec l'autre lorsque le raccord est assemblé pour limiter une force de compression appliquée audit joint.

16. Ensemble selon la revendication 1, dans lequel ladite première partie de joint (40) est comprimée axialement dans la plage d'environ 20%-30% lorsque le raccord est assemblé, tandis que ladite seconde partie de joint est comprimée axialement dans la plage d'environ 15%-20%.

17. Procéder pour rendre étanche un raccord à brides du type utilisant deux brides pour relier des extrémités de tubes alignés axialement, les brides formant entre elles une gorge, lorsque le raccord est assemblé, gorge' qui est définie par des faces d'étanchéité opposées axialement et par une face d'extrémité radiale, conformément aux revendications 1 à 16, le procédé comprenant les étapes qui consistent à:
(a) positionner un joint dans la gorge entre les faces d'étanchéité opposées axialement des brides;
(b) comprimer le joint axialement, lorsque le raccord est assemblé, pour déplacer une partie du joint qui vient en contact radialement avec la face d'extrémité radiale;
(c) comprimer le joint axialement suffisamment pour provoquer une compression radiale de celui-ci; et
(d) limiter la compression du joint pour maintenir une zone de dilatation pour ce dernier.

18. Procédé selon la revendication 17, dans lequel ladite compression radiale augmente une résistance circonférentielle du joint pour faire opposition à des forces radiales engendrées par la pression d'un fluide dans les tubes.

19. Procédé selon la revendication 17, dans lequel ladite compression radiale forme un joint d'étanchéité secondaire aligné radialement avec un joint d'étanchéité primaire et espacé de celui-ci, au niveau d'une interface des extrémités de tubes.

20. Procédé selon la revendication 17, comprenant l'étape qui consiste utiliser une jonction à ajustement serré entre le joint et les brides pour retenir le joint dans une position centrée souhaitée au cours de l'assemblage du raccord.

21. Procédé selon la revendication 20, comprenant l'étape qui consiste à doter le joint d'une masse suffisante pour utiliser celui-ci pour maintenir un alignement souhaité des brides au cours de l'assemblage du raccord.

22. Ensemble selon la revendication 1, dans lequel ledit joint comprend un élastomère.
